# EUROPÄISCHE PATENTSCHRIFT

(11) **EP 2 168 465 B1**
(45) Veröffentlichungstag und Bekanntmachung des Hinweises auf die Patenterteilung: **23.03.2011**
(21) Anmeldenummer: 09011965.2
(22) Anmeldetag: 19.09.2009
(51) Int. Cl.: A47J 31/06

(54) **Brühvorrichtung für Kaffee und Verfahren zum Erzeugen eines Kaffeegetränkes mit einer Brühvorrichtung**
Brewing device for coffee and method for creating a coffee drink with a brewing device
Dispositif d'ébouillantage de café et procédé de production d'une boisson au café à l'aide d'un dispositif d'ébouillantage

(30) Priorität: 26.09.2008 EP 08405243
(43) Veröffentlichungstag der Anmeldung: 31.03.2010
(73) Patentinhaber: Jura Elektroapparate AG, 4626 Niederbuchsiten (CH)
(72) Erfinder: Reyhanloo, Shahryar, 4573 Lohn-Ammansegg (CH)
(74) Vertreter: EGLI-EUROPEAN PATENT ATTORNEYS

(56) Entgegenhaltungen:
- EP-A- 1 125 535
- DE-A1- 4 037 366

## Beschreibung

Die Erfindung bezieht sich auf eine Brühvorrichtung für Kaffee mit einem Cremaventil nach dem Oberbegriff des Anspruchs 1 und ein Verfahren zum Erzeugen eines Kaffeegetränks mit einer Brühvorrichtung nach dem Oberbegriff des Anspruchs 9.

Die Crema stellt heute einen wesentlichen Bestandteil eines Kaffeegetränkes dar. Sie bindet einen grossen Teil der Kaffeearomen und trägt so wesentlich zu einem guten Kaffeegeschmack bei. Die Bildung der Crema wird durch verschiedene Faktoren beeinflusst. So zum Beispiel durch die Qualität des gebrühten Kaffees und die Art des Brühvorgangs.

Aus der Patentanmeldung EP 1 743 554 A1 ist eine Brühvorrichtung für einen Kaffeevollautomaten bekannt, bei welcher ein Cremaventil mit einer Brüheinheit und einem Kaffeeauslass verbunden ist. Das Cremaventil regelt mit einem Verschlusspfropfen und einer Druckfeder den Ausfluss des in der Brüheinheit gebrühten Kaffees. Beim Durchpressen des gebrühten Kaffees unter hohem Druck durch eine Öffnung am Verschlusspfropfen wird der Kaffee durchgewirbelt und es entsteht ein sehr feinporiger Schaum, welcher die Crema bildet. Bei dieser Kaffeemaschine kann die Erzeugung der Crema durch den Benutzer der Kaffeemaschine praktisch nicht beeinflusst werden. Der jeweils erhaltene Kaffee oder das Kaffeegetränk sieht somit optisch jeweils ähnlich aus.

Bei einer anderen bekannten Brühvorrichtung für Kaffee ist eine mechanische Drosselvorrichtung installiert, mit welcher es möglich ist, durch eine mechanische Verstellung der Drossel-Vorrichtung an einem von der Brühkammer entfernten Ende des Kaffeeauslaufs den Fluss des ausfliessenden Kaffees zu drosseln. Diese Drosselung hat zwar einen Einfluss auf die Menge der erzeugten Crema, der Einfluss ist allerdings eher gering. Weiterhin hat die Drosselung einen Einfluss auf die Kaffeetemperatur und somit auf die Qualität des gebrühten Kaffees. Weiterhin besteht die Gefahr, dass die Drosselvorrichtung verstopft.

Heute existieren eine Vielzahl verschiedener gängiger Kaffeegetränke wie beispielsweise Cappuccino, Latte Macchiato, Espresso, Ristretto usw. Je nach Kultur, regionalen Gepflogenheiten oder persönlichem Geschmack eines Benutzers der Kaffeemaschine sind dabei an die Menge und an die Porengrösse der Crema unterschiedliche Anforderungen gestellt.

Dokument EP-A-11 255 35 offenbart eine Brühvorrichtung nach dem Oberbegriff des unabhängigen Anspruch 1.

Der vorliegenden Erfindung liegt die Aufgabe zugrunde, die genannten Nachteile zu vermeiden und eine Brühvorrichtung für Kaffee und ein Verfahren zu schaffen, welche es ermöglichen, mit einfachen Mitteln die Menge der jeweils erzeugten Crema in einem grossen Bereich zu variieren und eine Vielzahl von Crema-Varianten mit einer Vielfalt von Eigenschaften zu erzeugen. Dabei sollen vorzugsweise Kaffeearomen gebunden werden und eine Crema erzeugt werden, welche an das jeweilige Kaffeegetränk, die kulturellen und/oder regionalen Gepflogenheiten und/oder den persönlichen Geschmack des Benutzers der Kaffeemaschine angepasst werden kann.

Diese Aufgabe wird gelöst durch eine Brühvorrichtung mit den Merkmalen des Patentanspruchs 1 und ein Verfahren mit den Merkmalen des Patentanspruchs 9.

Die Brühvorrichtung für Kaffee umfasst eine Brüheinheit zum Brühen von Kaffee, ein Cremaventil und einen Kaffeeauslass, wobei die Brüheinheit, das Cremaventil und der Kaffeeauslass derart miteinander verbunden sind, dass in der Brüheinheit gebrühter Kaffee durch das Cremaventil zum Kaffeeauslass führbar ist und das Cremaventil derart ausgebildet ist, dass der gebrühte Kaffee in einer Cremakammer des Cremaventils durchwirbelbar ist, so dass eine Crema erzeugt wird.

Erfindungsgemäss umfasst die Brühvorrichtung eine Injektionsvorrichtung zum Injizieren eines Gases in die Cremakammer und eine Dosiervorrichtung zum Dosieren der Menge des in die Cremakammer injizierten Gases, welche derart ausgebildet ist, dass bei jeder Injektion des Gases jeweils eine vorgegebene Menge des Gases injiziert wird, wobei die vorgegebene Menge des Gases ein Parameter ist, welcher veränderbar ist.

Mithilfe der Injektionsvorrichtung kann ein Gas in die Cremakammer injiziert werden, insbesondere während einer Zeitspanne, in der gebrühter Kaffee während der Erzeugung eines Kaffeegetränks in die Cremakammer strömt. Das injizierte Gas wird von dem aus der Brüheinheit ausfliessenden Kaffee umströmt. Die Verwirbelung des Kaffees mit dem injizierten Gas verstärkt die Bildung von feinporigem Schaum, der Crema, im Kaffee. Die Menge und die Art der erzeugten Crema, insbesondere die Porengrösse der Crema, werden bei der Injektion des Gases von mehreren Faktoren, wie beispielsweise der Menge und dem Druck des injizierten Gases, beeinflusst.

Erfindungsgemäss ist die Menge des Gases, welche bei der jeweiligen Injektion des Gases mittels der Injektionsvorrichtung in die Cremakammer injizierbar ist, jeweils ein vorgegebener Wert, welcher allerdings einen variablen Parameter der Brühvorrichtung darstellt und bei Bedarf geändert werden kann. Abhängig von der Grösse dieses Parameters werden bei der jeweils aufeinander folgenden Injektion des Gases gegebenenfalls unterschiedliche Mengen des Gases in die Cremakammer injiziert. Falls die jeweilige Injektion des Gases jeweils während der Erzeugung eines Kaffeegetränks stattfindet, so wird erreicht, dass in verschiedene Kaffeegetränke verschieden grosse Mengen des Gases injiziert werden, mit dem Ergebnis, dass die Menge der erzeugten Crema in Abhängigkeit von der jeweils vorgegebenen Menge des Gases variiert. Verschiedene Kaffeegetränke weisen somit unterschiedlich grosse Mengen an Crema auf (abhängig von der Menge des injizierten Gases).

In einer Ausführungsform der Brühvorrichtung umfasst die Injektionsvorrichtung eine Schlauchpumpe, eine Kolbenpumpe, eine andere Pumpe oder eine Druckflasche und das injizierte Gas ist vorzugsweise Luft, CO2 oder ein Aromastoff. Mit einer Schlauchpumpe, einer Kolbenpumpe oder einer anderen Pumpe kann beispielsweise Umgebungsluft unter genügend hohen Druck gesetzt werden, sodass diese in die Cremakammer injiziert werden kann. Es ist auch möglich, das Gas in einer Druckflasche zu speichern. Dabei kann die Druckflasche mit Umgebungsluft oder beispielsweise mit Kohlendioxid CO2 befüllt werden. Es ist auch denkbar, die Druckflasche mit einem Aromastoff zu befüllen und diese beim Injizieren in die Cremakammer mit Umgebungsluft zu vermischen.

Die Dosiervorrichtung ermöglicht eine Kontrolle der jeweiligen Injektion des Gases und insbesondere eine Kontrolle der Menge des jeweils injizierten Gases und ermöglicht die Erzeugung einer vorbestimmten Menge und Art von Crema auf dem Kaffeegetränk.

In einer Ausführungsform umfasst die Dosiervorrichtung eine Vorrichtung zum Aktivieren und/oder Deaktivieren der jeweiligen Pumpe für das Gas und/oder, falls die Injektionsvorrichtung ein regulierbares Ventil und/oder ein regulierbares Drosselorgan zum Regulieren einer Injektion des Gases umfasst, eine Vorrichtung zum Verstellen des jeweiligen regulierbaren Ventils und/oder eine Vorrichtung zum Verstellen des jeweiligen regulierbaren Drosselorgans. Mit der Vorrichtung zum Aktivieren sowie Deaktivieren der jeweiligen Pumpe oder Vorrichtung zum Verstellen des regulierbaren Ventils oder der Vorrichtung zum Verstellen des jeweiligen regulierbaren Drosselorgans kann der Zeitpunkt sowie die Menge des in die Cremakammer injizierten Gases bestimmt werden.

In einer Ausführungsform ist das Gas mit einem kleinen Überdruck injizierbar. Der Kaffee wird in der Brühkammer unter einem Druck gebrüht und fliesst danach durch eine Öffnung im Cremaventil in die Cremakammer. Um zu verhindern, dass der aus der Brühkammer ausfliessende Kaffee in die Injektionsvorrichtung fliesst, muss das Gas mit einem mindestens gleich hohen Druck aus der Injektionsvorrichtung in die Cremakammer injiziert werden. Wegen der Druckentspannung beim Fluss des Kaffees von der Brühkammer in die Cremakammer kommt es ausserdem zu einer optimalen Verwirbelung des Kaffees und zu einer gleichmässigen Durchmischung des Kaffees mit dem Gas, wodurch ein sehr feinporiger Schaum entsteht.

In einer weiteren Ausgestaltung ist die Menge des in die Cremakammer injizierten Gases (d.h. "vorgegebene Menge" des Gases, welche von der Injektionsvorrichtung in die Cremakammer injiziert wird) programmierbar oder einstellbar und/oder innerhalb vorgegebener Grenzen auswählbar. Durch die Programmierung oder Einstellung kann die Menge und die Art der Crema durch den Hersteller der Kaffeemaschine oder eine Fachperson für einzelne Kaffeegetränke vorgegeben werden. Somit kann, abhängig von regionalen oder kulturellen Vorlieben, eine bestimmte Menge und/oder Porengrösse der Crema voreingestellt werden. Der Benutzer der Brühvorrichtung kann abhängig vom persönlichen Geschmack die Menge und Porengrösse der Crema auswählen.

Um die "vorgegebene Menge" des injizierten Gases zu programmieren oder einzustellen und/oder auszuwählen, sind verschiedene Mittel geeignet. Es ist beispielsweise möglich, dass verschiedene Werte für die vorgegebene Menge des injizierten Gases oder verschiedene Werte für einen Steuerparameter, welcher zu einer vorgegebenen Menge des injizierten Gases äquivalent ist, in einer Steuereinheit der Brühvorrichtung vorgegeben sind, wobei ein Benutzer einen der vorgegebenen Werte auswählen kann (beispielsweise mithilfe einer Tastatur, einem berührungsempfindlichen Display, einem Drehknopf, einem Schieberegler oder mithilfe eines anderen Mittels, welches es ermöglicht, einen Parameter, welcher für die vorgegebene Menge des injizierten Gases repräsentativ ist, zu verändern). Es ist auch möglich, den auf die vorstehend genannte Weise ausgewählten Wert in einem Speicher, z.B. in einem Speicher der Steuereinheit der Brühvorrichtung, zu speichern, wobei die Steuereinheit den gespeicherten Wert bei der Steuerung der Brühvorrichtung berücksichtigt und im Betrieb der Brühvorrichtung jeweils veranlasst, dass eine dem gespeicherten Wert einsprechende Menge des Gases in die Cremakammer injiziert wird. Alternativ ist es auch möglich, dass ein Benutzer jeweils einen Wert für die vorgegebene Menge des injizierten Gases über eine Benutzerschnittstelle (z.B. eine Tastatur, eine Sprachsteuerung oder eine andere für eine Eingabe von Daten geeignete Schnittstelle) eingibt, wobei die Steuerung der Brühvorrichtung den jeweils eingegebenen Wert bei der Steuerung der Brühvorrichtung entsprechend berücksichtigt.

In einer weiteren Ausgestaltung injiziert die Injektionsvorrichtung das Gas mit einer Düse in die Cremakammer, wobei die Düse in einem Winkel zwischen 10° und 170° bezüglich der Flussrichtung des Kaffees in der Cremakammer und vorzugsweise in einem Winkel zwischen 10° und 90° entgegen der Flussrichtung des Kaffees in der Cremakammer angeordnet ist. Die Düse ist dabei an einer Eintrittsöffnung des gebrühten Kaffees in die Cremakammer angeordnet. Durch diese Anordnung der Düse wird das Gas direkt in den verwirbelnden Kaffee injiziert. Dadurch findet eine optimale Durchmischung des Kaffees mit dem Gas statt.

Das erfindungsgemässe Verfahren zum Erzeugen von Kaffeegetränken dient zur Herstellung eines Kaffeegetränks mit einer Brühvorrichtung für Kaffee, wobei die Brühvorrichtung mindestens eine Brüheinheit zum Brühen von Kaffee, ein Cremaventil und einen Kaffeeauslass umfasst und bei der Erzeugung eines Kaffeegetränks gebrühter Kaffee von der Brüheinheit durch das Cremaventil zum Kaffeeauslass fliesst. Das Cremaventil ist dabei derart ausgebildet, dass der gebrühte Kaffee in einer Cremakammer des Cremaventils durchwirbelt wird, so dass eine Crema erzeugt wird. Zusätzlich wird Gas in die Cremakammer injiziert, wobei beim Erzeugen eines ersten Kaffeegetränks eine erste Menge des Gases in die Cremakammer injiziert wird und beim Erzeugen eines zweiten Kaffeegetränks eine zweite Menge des Gases in die Cremakammer injiziert wird, wobei die erste Menge und die zweite Menge verschieden sind.

Durch das Dosieren der Menge des injizierten Gases wird die Menge und die Art der Crema, welche in der Cremakammer bei der Durchwirbelung des aus der Brüheinheit ausfliessenden Kaffees erzeugt wird, vorbestimmt und - abhängig von der jeweiligen Menge des Gases - verändert.

In einer Ausführungsform wird ein Zeitpunkt, an welchem die jeweilige Gas-Injektion beginnt, und/oder eine Dauer der jeweiligen Gas-Injektion und/oder ein Druck des injizierten Gases verändert. Durch die Vorgabe der Menge und des Drucks des injizierten Gases, als Funktion der Zeit, wird ein Profil definiert, welches einer (hinsichtlich Menge und Art) vorbestimmten Crema zugeordnet ist.

Das Verändern der verschiedenen Parameter, beispielsweise der Menge und/oder des Drucks des in die Cremakammer injizierten Gases, verändert die Menge und Porengrösse der erzeugten Crema. So hat insbesondere der Zeitpunkt oder die Dauer der Gas-Injektion während des Ausflusses des Kaffees aus der Brühkammer einen Einfluss auf die Menge der Crema. Durch Einstellen der jeweiligen Parameter als Funktion der Zeit können verschiedene Profile vorgegeben werden, welche - abhängig vom gewählten Kaffeegetränk, von regionalen Gepflogenheiten und/oder persönlichem Geschmack - verschiedenen Crema-Mengen und unterschiedlichen Porengrössen zugeordnet werden können. In einem Speicher (z.B. in einem elektronischen Speicher und insbesondere in einem Speicher einer Steuereinheit der jeweiligen Brühvorrichtung) können verschiedene Profile abgelegt werden.

In einer bevorzugten Ausführungsform wird durch Injizieren von Gas in die Cremakammer ein Überdruck in der Cremakammer erzeugt und Restwasser aus der Cremakammer und/oder einer Flüssigkeitsleitung zwischen der Brüheinheit und dem Kaffeeauslass im Anschluss an einen Kaffeebezug oder einen Reinigungsvorgang zum Kaffeeauslass transportiert.

Mit dem Erzeugen eines Überdrucks in der Cremakammer wird das Restwasser, welches sich in der Cremakammer beziehungsweise in der Flüssigkeitsleitung befindet, zum Kaffeeauslass geführt. Durch das Entfernen des Restwassers wird das Cremaventil, die Flüssigkeitsleitung und der Kaffeeauslass gereinigt. Kaffeerückstände werden aus der Brühvorrichtung entfernt und die Bildung von Kalk durch stehendes Restwasser wird vermindert. Gleichzeitig wird das Auskühlen des Restwassers verhindert, welches beim nächsten Kaffeebezug ausgeschwemmt wird und die Qualität dieses Kaffeegetränks beeinträchtigt. Weiter wird ein ungewünschtes Nachlaufen und Abtropfen von Restwasser aus dem Kaffeeauslauf verhindert.

Weitere Einzelheiten der Erfindung und insbesondere beispielhafte Ausführungsformen der erfindungsgemässen Vorrichtung und des erfindungsgemässen Verfahrens werden im Folgenden anhand der beigefügten Zeichnungen erläutert. Es zeigen:
- Fig. 1: eine schematische Darstellung einer Brühvorrichtung mit einer Brüheinheit und einem Cremaventil;
- Fig. 2: eine Explosionsdarstellung der Brüheinheit gemäss Fig. 1 mit dem Cremaventil und einer Injektionsvor- richtung;
- Fig. 3: eine Seitenansicht der Brüheinheit gemäss Fig. 2 mit dem Cremaventil und der Injektionsvorrichtung;
- Fig. 4: Crema auf einem Kaffeegetränk in einer Seitenan- sicht;
- Fig. 5: wie Fig. 4, jedoch mit mehr und feinporigerer Crema.

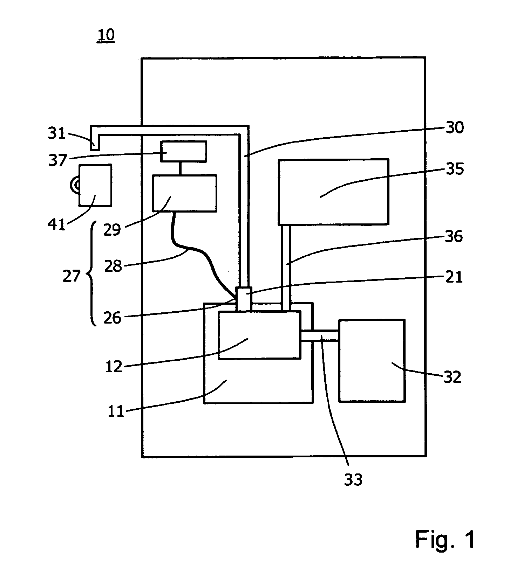

Figur 1 zeigt eine schematische Darstellung einer erfindungsgemässen Brühvorrichtung 10 für Kaffee. Die Brühvorrichtung 10 beinhaltet in der Darstellung einen Behälter 35, in welchem Rohkaffee in beliebiger Form, beispielsweise als Kaffeebohnen oder gemahlen, gelagert wird. Durch eine Kaffeezuleitung 36 wird der gemahlene Kaffee in eine Brühkammer 12 einer Brüheinheit 11 geleitet. In der Brühkammer 12 wird der Kaffee mit Wasser aus einem Wassertank 32, welcher durch eine Wasserzuleitung 33 ebenfalls mit der Brühkammer 12 verbunden ist, gebrüht. Am Ausfluss der Brüheinheit 11 befindet sich ein Cremaventil 21. Der gebrühte Kaffee fliesst durch das Cremaventil 21 und eine Flüssigkeitsleitung 30 zum Kaffeeauslass 31 in die Tasse 41. Das Cremaventil 21 ist derart ausgebildet, dass der gebrühte Kaffee in einer Cremakammer des Cremaventils 21 durchwirbelt und dabei eine Crema erzeugt wird.

Weiter befindet sich in der Brühvorrichtung 10 eine Injektionsvorrichtung 27 zum Injizieren eines Gases in das Cremaventil 21. Die Injektionsvorrichtung 27 umfasst eine Pumpe 29, einen Gasschlauch 28 sowie eine Düse, welche in die Cremakammer mündet. Durch den Gasschlauch 28 wird Gas von der Pumpe 29 zum Cremaventil 21 geführt. Das Gas wird am Cremaventil 21 durch die Düse in die Cremakammer injiziert und mit dem aus der Brüheinheit 11 ausfliessenden Kaffee vermischt. Durch eine Dosiervorrichtung 37, welche die Pumpe 29 nach Bedarf aktivieren und/oder deaktivieren kann, wird die Menge des in die Cremakammer injizierten Gases, welches in den gebrühten Kaffee injiziert wird, bestimmt.

Alternativ zu der Pumpe 29 kann auch ein Druckbehälter mit einem regulierbaren Ventil und/oder einem regulierbaren Drosselorgan verwendet werden. Dabei wird das regulierbare Ventil von der Dosiervorrichtung 37 nach Bedarf verstellt (z.B. geöffnet oder geschlossen) bzw. das Drosselorgan von der Dosiervorrichtung 37 nach Bedarf geeignet verstellt. Es ist auch eine Kombination möglich, so kann beispielsweise eine Pumpe 29 zusammen mit einem Ventil bzw. einem Drosselorgan und/oder einem Druckbehälter eingesetzt werden. Dementsprechend umfasst die Dosiervorrichtung 37 eine Vorrichtung zum Aktivieren und/oder Deaktivieren der jeweiligen Pumpe 29 und/oder eine Vorrichtung zum Verstellen des jeweiligen regulierbaren Ventils und/oder eine Vorrichtung zum Verstellen des jeweiligen regulierbaren Drosselorgans.

In einer einfachen Ausgestaltung wird beispielsweise Umgebungsluft in einer Schlauchpumpe oder einer Kolbenpumpe unter einen Überdruck gesetzt und direkt in die Cremakammer injiziert. Die Pumpe 29 wird jeweils genau dann durch die Dosiervorrichtung 37 aktiviert, wenn das Gas in die Cremakammer injiziert werden soll. Beispielsweise durch Verändern einer der Pumpe 29 zugeführten elektrischen Leistung, kann der von der Pumpe 29 erzeugt Druck oder die Gasmenge verändert werden.

Es besteht auch die Möglichkeit, ein Kaffeegetränk zu beziehen, ohne dass zusätzlich Gas in die Cremakammer injizieren wird. Das heisst, es wird nur eine minimale Menge Crema durch das Cremaventil 21 erzeugt. In diesem Fall soll die Pumpe 29 nicht mit elektrischer Energie versorgt werden. Die Injektionsvorrichtung 27 sowie die Pumpe 29 muss dabei den in der Cremakammer vorhandenen Druck des aus der Brüheinheit 11 ausfliessenden Kaffees genügend abdichten, sodass ein Ausfliessen des Kaffees in die Injektionsvorrichtung 27 verhindert wird. Die Injektionsvorrichtung 27 ist dementsprechend so zu konstruieren, dass sie den in der Cremakammer herrschenden Druck ohne Energieaufnahme abzudichten vermag. Es kann zusätzlich auch ein regulierbares Ventil in der Nähe der Düse eingesetzt werden, welches den Rückfluss von Kaffee aus der Cremakammer in den Gasschlauch 28 verhindert. Alternativ kann der Gasschlauch 28 auch gequetscht oder verschlossen werden, um einen Fluss von Flüssigkeit durch den Gasschlauch zu verhindern.

Wie bereits erwähnt, kann anstelle der Pumpe 29 auch ein Druckbehälter eingesetzt werden, welcher beispielsweise an einem von der Brühvorrichtung 10 entfernten Ort aufgefüllt wird. Der Druckbehälter kann dabei mit einem Gas wie beispielsweise Kohlendioxid CO2, Sauerstoff 02 oder beispielsweise einem Aromastoff befüllt werden. Der Druckbehälter kann auch durch die Pumpe 29 befüllt werden und als Speicher für Druckluft dienen. Zur Dosierung der Gasinjektion wird ein regulierbares Ventil an der Druckflasche angeordnet oder in eine Verbindungsleitung für das Gas zwischen der Druckflasche und der Cremakammer integriert. Somit lässt sich die Menge des injizierten Gases und der Zeitpunkt des Beginns der Gasinjektion sowie die jeweilige Dauer der Gasinjektion nach Bedarf verändern.

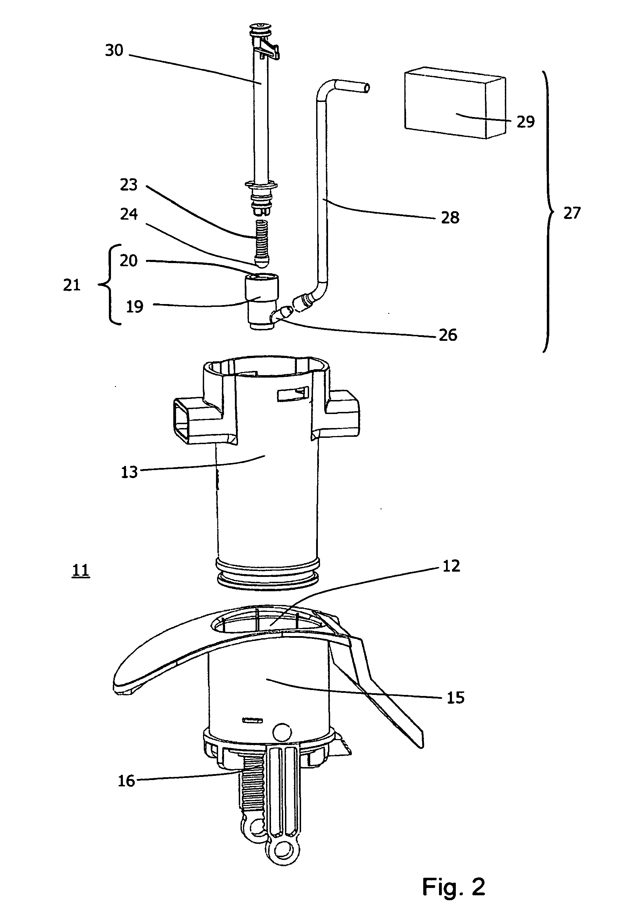

Figur 2 zeigt eine Explosionsdarstellung der Brüheinheit 11 mit Cremaventil 21 und der Injektionsvorrichtung 27. Das Cremaventil 21 wird durch den Gasschlauch 28 mit der Pumpe 29 verbunden. Der Gasschlauch 28 wird an der Düse 26 des Cremaventils 21 angeschlossen. Das Cremaventil 21 umfasst ein Ventilgehäuse 19, in dessen Innern eine Cremakammer 20 ausgebildet ist, wobei in die Cremakammer 20 ein Verschlusspfropfen 24 eingelassen ist. Der Verschlusspfropfen 24 wird durch eine Druckfeder 23, welche an einem Ende an einer Flüssigkeitsleitung 30 anliegt, nach unten gedrückt.

Das Cremaventil 21 ist in einen Brühkolben 13 integriert, welcher in einen Brühzylinder 15 eingeschoben wird. Durch das Ineinanderschieben von Brühkolben 13 und Brühzylinder 15 entsteht eine Brühkammer 12, in welcher der Kaffee gebrüht wird. Einem nach dem Brühvorgang zurückbleibenden Kaffeepulverrückstand wird im Anschluss an den Brühvorgang das Wasser entzogen, indem der Brühkolben 13 in den Brühzylinder 15 gedrückt wird. Der zurückbleibende Kaffeetrester wird dann durch einen Ausstosskolben 16 aus dem Brühzylinder 15 in einen Tresterbehälter ausgestossen. Danach ist die Brühvorrichtung für einen weiteren Kaffeebrühvorgang bereit.

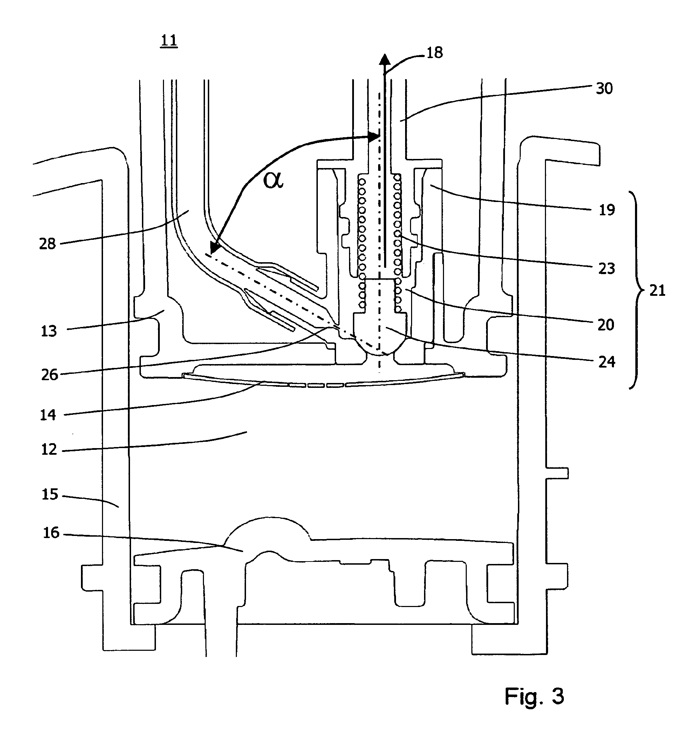

Figur 3 zeigt eine Seitenansicht der Brüheinheit 11 mit dem Cremaventil 21 und der Injektionsvorrichtung. Während des Brühvorgangs wird Kaffeepulver in der Brühkammer 12 mit heissem Wasser aufgebrüht. Das Wasser fliesst beispielsweise von der Unterseite der Brühkammer 12 ein. Bereits durch den Brühvorgang kann beispielsweise durch Vorbrühen, sowie Brühtemperatur und Brühdruck, die Bildung der Crema beeinflusst werden. Das gebrühte Kaffeewasser fliesst durch ein Metallsieb 14, welches am Brühkolben 13 befestigt ist, zum Cremaventil 21. Das Metallsieb 14 verhindert den Ausfluss von Kaffeepulver aus der Brühkammer 12.

Der Brühvorgang findet unter Druck statt. Die Druckfeder 23 im Cremaventil 21 muss entsprechend dimensioniert werden, sodass der Verschlusspfropfen 24 erst bei entsprechendem Druck den gebrühten Kaffee aus der Brühkammer 12 in die Cremakammer 20 des Cremaventils 21 ausfliesen lässt. Durch die Form des Verschlusspfropfens 24 und den hohen Druck, mit welchem der Kaffee aus der Brühkammer 12 ausfliesst, entstehen entlang der Oberfläche des Verschlusspfropfens 24 und des Cremaventils 21 Wirbel. Durch die Entspannung und die Verwirbelung entsteht die Crema im Kaffee. Anschliessend fliesst der Kaffee durch die Flüssigkeitsleitung 30 zum Kaffeeauslass 31.

Am Cremaventil 21 ist die Injektionsvorrichtung 27 befestigt. Mittels der Injektionsvorrichtung 27 kann das Gas durch eine Düse 26 in die Cremakammer 20 injiziert werden. Die Düse 26 hat vorzugsweise einen Durchmesser von ca. 0,5mm. Das Gas wird dabei in den aus der Brühkammer 12 ausfliessenden Kaffee injiziert. Es hat sich dabei als zweckmässig erwiesen, wenn die Düse 26 an dem Cremaventil 21 nahe am Verschlusspfropfen 24 in einem Winkel α, zwischen 10° und 170° bezüglich der Flussrichtung 18 des aus der Brühkammer 12 fliessenden Kaffees angeordnet ist (die Flussrichtung ist in Fig. 3 durch einen mit dem Bezugszeichen 18 versehenen Pfeil gekennzeichnet). Weiterhin hat es sich als besonders vorteilhaft erwiesen, wenn die Düse 26 in einem Winkel α zwischen 10° und 90° entgegen der Flussrichtung 18 des aus der Brühkammer 12 fliessenden Kaffees angeordnet ist. Dadurch wird die Vermischung des Gases und des Kaffees optimiert, wodurch eine grosse Menge an kleinen Bläschen entstehen. Diese kleinen Bläschen bilden den feinporigen Schaum, die Crema.

Abhängig von verschiedenen Parametern wie zum Beispiel der in die Cremakammer 20 injizierten Menge an Gas, dem Druck des injizierten Gases und dem Zeitpunkt an welchem die Gasinjektion beginnt, entsteht eine andere Art und Menge von Crema.

Durch eine Spezifikation der Parameter Gasmenge und Gasdruck als Funktion der Zeit wird ein Profil definiert. Das Profil ist einer in der Art und Menge vorbestimmten Crema zugeordnet. In einem (in den Figuren nicht dargestellten) Speicher können verschiedene Profile abgelegt werden. Ein derartiger Speicher kann beispielweise ein elektronischer Speicher sein, wobei es zweckmässig ist, den Speicher der jeweiligen Steuereinheit zur Steuerung der Brühvorrichtung 10 zuzuordnen, damit die gespeicherten Profile für die Steuereinheit zugänglich sind. Durch verschiedene Profile kann zu einem bestimmten Kaffeegetränk eine den regionalen Gepflogenheiten entsprechende Crema erzeugt werden. Die Parameter eines Profils können beispielsweise durch den Hersteller oder einen Betreiber der Brühvorrichtung 10 vorgegeben werden. Weiter können zusätzlich für den Benutzer der Brühvorrichtung, abhängig von dessen persönlichen Geschmack, ein oder mehrere Profile ablegt oder von dem Benutzer bei einem Kaffeegetränkebezug eingestellt werden.

Um Störungen in der Brühvorrichtung 10 zu verhindern und ein Kaffeegetränk von hoher Qualität zu erzeugen, benötigt die Brühvorrichtung 10 eine gewisse Pflege. Durch ein Injizieren des Gases in das Cremaventil 21 nach dem Bezug des Kaffeegetränkes können das Cremaventil 21 sowie die Flüssigkeitsleitung 30 und der Kaffeeauslass 31 von Restwasser, welches nach dem Brühvorgang aufgrund konstruktiver Gegebenheiten zurückbleibt, entleert werden. Das Entfernen des Restwassers aus der Brühvorrichtung 10 durch das Injizieren des Gases in die Cremakammer 20 kann auch nach einem Reinigungsvorgang erfolgen. Es ist ebenfalls möglich, dass die Parameter Gasmenge und Gasdruck als Funktion der Zeit nach einem bestimmten Profil, abhängig von der Art der Reinigung, vorgegeben werden.

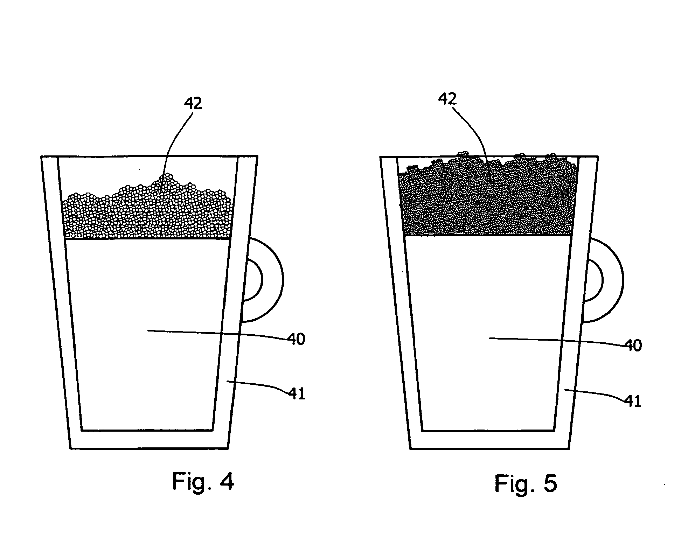

Die Figuren 4 und 5 zeigen je eine Tasse 41 mit einem Kaffeegetränk 40 mit verschiedener Crema 42. In Figur 4 wurde eine geringere Menge Crema 42 erzeugt. Die Höhe der Crema 42 auf dem Kaffeegetränk 40 und damit das gesamte Volumen der Crema 42 ist deshalb geringer als in Figur 5. Bei der Crema 42 in der Figur 5 wurden die Parameter zur Erzeugung der Crema 42 so vorgegeben, dass gegenüber Figur 4 ein feinporigerer Schaum und damit eine feinporigere Crema erzeugt wird. Die Crema 42 kann sich nebst der Menge und der Feinporigkeit auch in ihrem Aroma und in ihrer Färbung unterscheiden. Beispielsweise durch ein Zugeben von Aromastoffen kann der Duft oder Geschmack der Crema 42 beeinflusst werden. Durch die Zugabe beispielsweise von Milch oder verschiedener Rohkaffeesorten kann zusätzlich die Färbung der Crema 42 beeinflusst werden.

Das Kaffeegetränk 40 besteht meist im Wesentlichen aus mit Wasser gebrühtem Rohkaffee. Zusätzlich kann dem gebrühten Kaffee noch Milch, Zucker oder auch beispielsweise Schokoladenpulver oder flüssige Schokolade beigemischt werden. Es lassen sich so abhängig von kulturellen und regionalen Gepflogenheiten und dem persönliche Geschmack des Benutzers der Brühvorrichtung eine Vielzahl unterschiedlicher Kaffeegetränke herstellen und jeweils eine entsprechende, individuelle Crema 42 erzeugen.

Um zu ermöglichen, dass die jeweilige Menge des Gases, welche mittels der Injektionsvorrichtung 27 in die Cremakammer 20 injiziert wird, von einem Benutzer bei Bedarf geändert werden kann, umfasst die Brühvorrichtung 10 eine (in Fig. 1-5 nicht dargestellte) Benutzerschnittstelle, mit deren Hilfe der Benutzer die jeweils in die Cremakammer 20 zu injizierende Menge des Gases spezifizieren kann. Als Benutzerschnittstelle ist beispielsweise eine Tastatur, ein berührungsempfindliches Display, ein Drehknopf, ein Schieberegler, eine Sprachsteuerung oder eine andere für eine Eingabe von Daten geeignete Schnittstelle geeignet. Im Betrieb der Brühvorrichtung 10 sorgt die Dosiervorrichtung 37 dafür, dass bei jeder folgenden Injektion des Gases jeweils eine Menge des Gases injiziert wird, welche der jeweils spezifizierten Menge des Gases entspricht.

## Patentansprüche

1. Brühvorrichtung (10) zum Erzeugen von Kaffeegetränken, mit
• einer Brüheinheit (11) zum Brühen von Kaffee,
• einem Cremaventil (21) und
• einem Kaffeeauslass (31),
wobei die Brüheinheit (11), das Cremaventil (21) und der Kaffeeauslass (31) derart miteinander verbunden sind, dass zum Erzeugen eines Kaffeegetränkes in der Brüheinheit (11) gebrühter Kaffee durch das Cremaventil (21) zum Kaffeeauslass (31) führbar ist und das Cremaventil (21) derart ausgebildet ist, dass der gebrühte Kaffee in einer Cremakammer (20) des Cremaventils (21) durchwirbelbar ist, sodass eine Crema (42) erzeugt wird,
**dadurch gekennzeichnet, dass**
die Brühvorrichtung umfasst:
eine Injektionsvorrichtung (27) zum Injizieren eines Gases in die Cremakammer (20) und
eine Dosiervorrichtung (37) zum Dosieren der Menge des in die Cremakammer (20) injizierten Gases, welche derart ausgebildet ist, dass bei jeder Injektion des Gases jeweils eine vorgegebene Menge des Gases injiziert wird, wobei die vorgegebene Menge des Gases ein Parameter ist, welcher veränderbar ist.

2. Brühvorrichtung nach Anspruch 1, **dadurch gekennzeichnet, dass** die Injektionsvorrichtung (27) eine Schlauchpumpe (29), eine Kolbenpumpe (29), eine andere Pumpe oder eine Druckflasche und/oder ein regulierbares Ventil und/oder ein regulierbares Drosselorgan zum Regulieren einer Injektion des Gases umfasst.

3. Brühvorrichtung nach Anspruch 2, **dadurch gekennzeichnet, dass** die Dosiervorrichtung (37) eine Vorrichtung zum Aktivieren und/oder Deaktivieren der jeweiligen Pumpe (29) und/oder eine Vorrichtung zum Verstellen des regulierbaren Ventils und/oder eine Vorrichtung zum Verstellen des regulierbaren Drosselorgans umfasst.

4. Brühvorrichtung nach einem der Ansprüche 1 bis 3, **dadurch gekennzeichnet, dass** das injizierte Gas vorzugsweise Luft, CO2 oder ein Aromastoff ist.

5. Brühvorrichtung nach einem der Ansprüche 1 bis 4, **dadurch gekennzeichnet, dass** die Menge des in die Cremakammer (20) injizierten Gases programmierbar oder einstellbar ist.

6. Brühvorrichtung nach Anspruch 5, **dadurch gekennzeichnet, dass** die Menge des in die Cremakammer (20) injizierten Gases innerhalb vorgegebener Grenzen auswählbar ist.

7. Brühvorrichtung nach einem der Ansprüche 1 bis 6, **dadurch gekennzeichnet, dass** die Injektionsvorrichtung (27) das Gas mit einer Düse (26) in die Cremakammer (20) injiziert, wobei die Düse (26) in einem Winkel (α) zwischen 10° und 170° bezüglich der Flussrichtung (18) des Kaffees in der Cremakammer (20), vorzugsweise in einem (α) zwischen 10° und 90° entgegen der Flussrichtung (18) des Kaffees, angeordnet ist.

8. Brühvorrichtung nach Anspruch 7, **dadurch gekennzeichnet, dass** die Düse (26) an einer Eintrittsöffnung für den gebrühten Kaffees in die Cremakammer (20) mündet.

9. Verfahren zum Erzeugen von Kaffeegetränken, mit einer Brühvorrichtung (10) für Kaffee, wobei die Brühvorrichtung (10) mindestens
• eine Brüheinheit (11) zum Brühen von Kaffee,
• ein Cremaventil (21) und
• einen Kaffeeauslass (31)
umfasst, wobei beim Erzeugen eines Kaffeegetränks gebrühter Kaffee von der Brüheinheit (11) durch das Cremaventil (21) zum Kaffeeauslass (31) fliesst und das Cremaventil (21) derart ausgebildet ist, dass der gebrühte Kaffee in einer Cremakammer (20) des Cremaventils (21) durchwirbelt wird, so dass eine Crema (42) erzeugt wird,
**dadurch gekennzeichnet, dass**
beim Erzeugen eines ersten Kaffeegetränks eine erste Menge eines Gases in die Cremakammer (20) injiziert wird und beim Erzeugen eines zweiten Kaffeegetränks eine zweite Menge eines Gases in die Cremakammer (20) injiziert wird, wobei die erste Menge und die zweite Menge verschieden sind.

10. Verfahren nach Anspruch 9, **dadurch gekennzeichnet, dass** ein Zeitpunkt, zu welchem die jeweilige Gas-Injektion beginnt, und/oder eine Dauer der Gas-Injektion und/oder ein Druck des injizierten Gases verändert wird.

11. Verfahren nach Anspruch 10, **dadurch gekennzeichnet, dass** durch die Vorgabe der Menge und des Drucks des injizierten Gases als Funktion der Zeit ein gespeichertes Profil vorgegeben wird, welches einer Crema (42) mit vorbestimmten Eigenschaften zugeordnet ist.

12. Verfahren nach einem der Ansprüche 9 bis 11, **dadurch gekennzeichnet, dass** das Gas mit einer Düse (26) in einem Winkel (α) zwischen 10° und 170° bezüglich der Flussrichtung (18) des Kaffees beim Eintritt des gebrühten Kaffees in die Cremakammer (20), bevorzugt in einem Winkel (α) zwischen 10° und 90° entgegen der Flussrichtung (18) des Kaffees, injiziert wird.

13. Verfahren nach einem der Ansprüche 9 bis 12, **dadurch gekennzeichnet, dass** die Menge des in die Cremakammer (20) injizierten Gases programmiert oder eingestellt und/oder innerhalb vorgegebener Grenze ausgewählt wird.

14. Verfahren nach einem der Ansprüche 9 bis 13, **dadurch gekennzeichnet, dass** Restwasser aus der Cremakammer (20) und/oder einer Flüssigkeitsleitung (24) zwischen der Brüheinheit (11) und dem Kaffeeauslass (31) im Anschluss an einen Kaffeebezug oder einen Reinigungsvorgang durch das Injizieren von Gas zum Kaffeeauslass (31) transportiert wird.

15. Verfahren nach einem der Ansprüche 9 bis 14, **dadurch gekennzeichnet, dass** im Anschluss an einen Kaffeebezug oder einen Reinigungsvorgang durch Injizieren von Gas in die Cremakammer (20) ein Überdruck in der Cremakammer (20) erzeugt wird.

## Claims

1. A brewing device (10) for making coffee beverages, comprising
• a brewing unit (11) for brewing coffee,
• a crema valve (21) and
• a coffee outlet (31),
wherein the brewing unit (11), the crema valve (21) and the coffee outlet (31) are connected to one another such that coffee brewed in the brewing unit (11) can be guided through the crema valve (21) to the coffee outlet (31) for making a coffee beverage
and the crema valve (21) is embodied such that the brewed coffee can be swirled in a crema chamber (20) of the crema valve (21), so that a crema (42) is made,
**characterized in that**
the brewing device comprises:
an injection device (27) for injecting a gas into the crema chamber (20) and
a metering device (37) for metering the quantity of the gas injected into the crema chamber (20), which is embodied such that a predetermined quantity of the gas is in each case injected in response to each injection of the gas, wherein the predetermined quantity of the gas is a parameter, which can be changed.

2. The brewing device according to claim 1, **characterized in that** the injection device (27) comprises a hose pump (29), a piston pump (29), another pump or a pressure cylinder and/or a valve, which can be regulated, and/or a throttle, which can be regulated, for regulating an injection of the gas.

3. The brewing device according to claim 2, **characterized in that** the metering device (37) comprises a device for activating and/or deactivating the respective pump (29) and/or a device for adjusting the valve, which can be regulated, and/or a device for adjusting the throttle, which can be regulated.

4. The brewing device according to one of claims 1 to 3, **characterized in that** the injected gas is preferably air, CO₂ or a flavoring agent.

5. The brewing device according to one of claims 1 to 4, **characterized in that** the quantity of the gas injected into the crema chamber (20) can be programmed or adjusted.

6. The brewing device according to claim 5, **characterized in that** the quantity of the gas injected into the crema chamber (20) can be chosen within predetermined limits.

7. The brewing device according to one of claims 1 to 6, **characterized in that** the injection device (27) injects the gas into the crema chamber (20) by means of a nozzle (26), wherein the nozzle (26) is arranged in the crema chamber (20) at an angle (α) of between 10° and 170° relative to the flow direction (18) of the coffee, preferably at an angle (α) of between 10° and 90° contrary to the flow direction (18) of the coffee.

8. The brewing device according to claim 7, **characterized in that** the nozzle (26) discharges into the crema chamber (20) at an inlet opening for the brewed coffee.

9. A method for making coffee beverages, comprising a brewing device (10) for coffee, wherein the brewing device (10) comprises at least
• one brewing unit (11) for brewing coffee,
• one crema valve (21) and
• one coffee outlet (31),
wherein brewed coffee flows from the brewing unit (11) through the crema valve (21) to the coffee outlet (31) when a coffee beverage is made
and the crema valve (21) is embodied such that the brewed coffee is swirled in a crema chamber (20) of the crema valve (21), so that a crema (42) is made,
**characterized in that**
a first quantity of a gas is injected into the crema chamber (20) when a first coffee beverage is made and a second quantity of a gas is injected into the crema chamber (20) when a second coffee beverage is made, wherein the first quantity and the second quantity are different.

10. The method according to claim 9, **characterized in that** a point in time, at which the respective gas injection starts, and/or a duration of the gas injection and/or a pressure of the injected gas is changed.

11. The method according to claim 10, **characterized in that** a stored profile, which is assigned to a crema (42) comprising predetermined characteristics, is predetermined by the provision of the quantity and of the pressure of the injected gas as function of the time.

12. The method according to one of claims 9 to 11, **characterized in that** the gas is injected by means of a nozzle (26) at an angle (α) of between 10° and 170° relative to the flow direction (18) of the coffee when the brewed coffee enters into the crema chamber (20), preferably at an angle (α) of between 10° and 90° opposite to the flow direction (18) of the coffee.

13. The method according to one of claims 9 to 12, **characterized in that** the quantity of the gas injected into the crema chamber (20) is programmed or adjusted and/or is chosen within a predetermined limit.

14. The method according to one of claims 9 to 13, **characterized in that** residual water is transported out of the crema chamber (20) and/or a liquid line (24) between the brewing unit (11) and the coffee outlet (31) to the coffee outlet (31) following a coffee draw-off or a cleaning process by injecting gas.

15. The method according to one of claims 9 to 14, **characterized in that** an excess pressure is generated in the crema chamber (20) by injecting gas into the crema chamber (20) following a coffee draw-off or a cleaning process.

## Revendications

1. Dispositif d'infusion (10) pour préparer des boissons à base de café, avec
• une unité d'infusion (11) pour infuser du café,
• une valve à crème (21) et
• une sortie de café (31),
l'unité d'infusion (11), la valve à crème (21) et la sortie de café (31) étant reliées entre elles de telle sorte que, pour la préparation d'une boisson à base de café dans l'unité d'infusion (11), du café infusé puisse être conduit à travers la valve à crème (21) vers la sortie de café (31)
et la valve à crème (21) étant conçue de sorte que le café infusé puisse tourbillonner à travers une chambre à crème (20) de la valve à crème (21,) de sorte à préparer un café crème (42),
**caractérisé en ce que**
le dispositif d'infusion comprend :
un dispositif d'injection (27) pour injecter un gaz dans la chambre à crème (20) et
un dispositif de dosage (37) pour doser la quantité de gaz injectée dans la chambre à crème (20), qui est conçu de telle sorte qu'à chaque injection de gaz, chaque fois une quantité prédéfinie du gaz soit injectée, la quantité prédéfinie du gaz étant un paramètre qui est modifiable.

2. Dispositif d'infusion selon la revendication 1, **caractérisé en ce** le dispositif d'injection (27) comprend une pompe péristaltique (29), und pompe à piston (29), une autre pompe ou un flacon à pression et/ou une soupe réglable et/ou un organe d'étranglement réglable pour réguler une injection du gaz.

3. Dispositif d'infusion selon la revendication 2, **caractérisé en ce que** le dispositif de dosage (37) comprend un dispositif pour activer et/ou désactiver la pompe (29) concernée et/ou un dispositif pour ajuster la soupape réglable et/ou un dispositif pour ajuster l'organe d'étranglement réglable.

4. Dispositif d'infusion selon l'une quelconque des revendications 1 à 3, **caractérisé en ce que** le gaz injecté est de préférence de l'air, du CO₂ ou une substance aromatique.

5. Dispositif d'infusion selon l'une quelconque des revendications 1 à 4, **caractérisé en ce que** la quantité du gaz injecté dans la chambre à crème (20) est programmable ou réglable.

6. Dispositif d'infusion selon la revendication 5, **caractérisé en ce que** la quantité du gaz injecté dans la chambre à crème (20) est sélectionnable dans des limites prédéfinies.

7. Dispositif d'infusion selon l'une quelconque des revendications 1 à 6, **caractérisé en ce que** le dispositif d'injection (27) injecte le gaz avec une buse (26) dans la chambre à crème (20), la buse (26) étant disposée sous un angle (α) compris entre 10° et 170° par rapport au sens d'écoulement (18) du café dans la chambre à crème (20), de préférence sous un angle (α) compris entre 10° et 90° à l'encontre du sens d'écoulement (18) du café.

8. Dispositif d'infusion selon la revendication 7, **caractérisé en ce que** sur un orifice d'entrée pour le café infusé, la buse (26) débouche dans la chambre à crème (20).

9. Procédé de préparation de boissons à base de café, avec un dispositif d'infusion (10) de café, le dispositif d'infusion (10) comprenant au moins
• une unité d'infusion (11) pour infuser du café,
• une valve à crème (21) et
• une sortie de café (31),
lors de la préparation d'une boisson à base de café, du café infusé s'écoulant de l'unité d'infusion (11) à travers la valve à crème (21) vers la sortie de café (31)
et la valve à crème (21) étant conçue de sorte que le café infusé tourbillonne à travers chambre à crème (20) de la valve à crème (21), de sorte à préparer un café crème (42),
**caractérisé en ce que**,
lors de la préparation d'une première boisson à base de café, une première quantité d'un gaz est injectée dans la chambre à crème (20) et à la préparation d'une deuxième boisson à base de café, une deuxième quantité d'un gaz est injectée dans la chambre à crème (20), la première quantité et la deuxième quantité étant différentes.

10. Procédé selon la revendication 9, **caractérisé en ce qu'**un moment auquel l'injection de gaz concernée commence et/ou une durée de l'injection de gaz et/ou une pression de l'injection de gaz est/sont modifié(s).

11. Procédé selon la revendication 10, **caractérisé en ce que** par prescription de la quantité et de la pression du gaz injecté en tant que fonction du temps, il est prédéfini un profil mémorisé qui est affecté à un café crème (42) avec des caractéristiques prédéfinies.

12. Procédé selon l'une quelconque des revendications 9 à 11, **caractérisé en ce que** le gaz est injecté avec une buse (26) sous un angle (α) compris entre 10° et 170° par rapport au sens d'écoulement (18) du café à l'entrée du café infusé dans la chambre à crème (20), de préférence sous un angle (α) compris entre 10° et 90° à l'encontre du sens d'écoulement (18) du café.

13. Procédé d'infusion selon l'une quelconque des revendications 9 à 12, **caractérisé en ce que** la quantité du gaz injecté dans la chambre à crème (20) est programmée ou réglée et/ou sélectionnée dans des limites prédéfinies.

14. Procédé selon l'une quelconque des revendications 9 à 13, **caractérisé en ce que**, par l'injection de gaz, de l'eau résiduelle est transportée vers la sortie de café (31), à partir de la chambre à crème (20) et ou d'un conduit à liquide (24) entre l'unité d'infusion (11) et la sortie de café (31), suite à une production de café ou à un processus de nettoyage.

15. Procédé selon l'une quelconque des revendications 9 à 14, **caractérisé en ce qu'**à la suite d'une production de café ou d'un processus de nettoyage, par injection de gaz dans la chambre à crème (20), une surpression est créée dans la chambre à crème (20).
